# EUROPEAN PATENT SPECIFICATION

(11) **EP 3 816 796 B1**
(45) Date of publication and mention of the grant of the patent: **21.12.2022**
(21) Application number: 20199863.0
(22) Date of filing: 02.10.2020
(51) Int. Cl.: G06F 8/654, G06F 9/4401

(54) **INFORMATION PROCESSING APPARATUS, INFORMATION PROCESSING APPARATUS UPDATE METHOD, AND CARRIER MEANS**
INFORMATIONSVERARBEITUNGSGERÄT, AKTUALISIERUNGSVERFAHREN FÜR INFORMATIONSVERARBEITUNGSGERÄT UND TRÄGERMEDIEN
APPAREIL DE TRAITEMENT D'INFORMATIONS, PROCÉDÉ DE MISE À JOUR D'APPAREIL DE TRAITEMENT D'INFORMATIONS ET SUPPORT

(30) Priority: 31.10.2019 JP 2019198951
(43) Date of publication of application: 05.05.2021
(73) Proprietor: Ricoh Company, Ltd., Tokyo 143-8555 (JP)
(72) Inventor: KOIKE, Kazuma, Tokyo, 143-8555 (JP)
(74) Representative: Marks & Clerk LLP

(56) References cited:
- EP-A1- 2 728 467
- JP-A- 2004 242 242
- JP-A- 2013 218 510
- US-A1- 2009 240 932

## Description

### BACKGROUND

### Technical Field

The present disclosure relates to an information processing apparatus, an information processing apparatus update method, and a carrier means.

### Background Art

A method of updating a boot image (snapshot image) for hibernation when updating system firmware is known.

A method of shortening update time is disclosed in Japanese Patent No. 2013-218510 (Patent Document 1). A consistency check with firmware is performed at time of updating and if the consistency is confirmed, only the firmware is updated and if the consistency is not confirmed, the snapshot image is deleted, overwritten, or updated.

EP 2 728 467 A1 proposes an image forming apparatus for updating a boot image including an interface unit to receive a new version of firmware. US2009/0240932A1 proposes an information processing device, a screen display control part, and a firmware update part that updates a firmware of the screen display control part.

However, in the conventional update method described above , the update time can be shortened only when the firmware and the snapshot image are matched, and when the firmware and the snapshot image are not matched, the update time of the snapshot image is not shortened.

### SUMMARY

Embodiments of the present disclosure describe an information processing apparatus, an information processing apparatus update method, and a carrier means as set out in independent claims 1, 5 and 6. According to the embodiments of the present disclosure, the snapshot image can be updated efficiently.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a block diagram illustrating a hardware configuration of an information processing apparatus according to embodiments of the present disclosure;
FIG. 2 is a block diagram illustrating an example of a configuration of a package for updating the information processing apparatus;
FIG. 3 is a flowchart illustrating an update process of the information processing apparatus according to embodiments of the present disclosure;
FIG. 4 is a block diagram illustrating a functional configuration of information processing apparatus according to the update process of FIG. 3;
FIG. 5 is a flowchart illustrating an update execution time determination process;
FIG. 6 is a flowchart illustrating a snapshot image update process according to embodiments of the present disclosure;
FIG. 7 is a flowchart illustrating a selection process of a startup mode by a hibernation invalidation flag;
FIG. 8 is a diagram illustrating an example of a time-based usage counter based on printing;
FIG. 9 is a diagram illustrating an example of a snapshot image update setting screen;
FIG. 10 is a diagram illustrating a conventional update process of the information processing apparatus;
FIG. 11 is a diagram illustrating a package update process according to embodiments of the present disclosure; and
FIG. 12 is a diagram illustrating an update process when updating a snapshot image according to embodiments of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology.

As used herein, the singular forms "a", "an", and "the" are intended to include the plural forms as well, unless the context clearly indicates otherwise.

Referring to the drawings, embodiments of the present disclosure is described. In order to facilitate understanding of the description, the same components are denoted by the same reference numerals in the respective drawings as much as possible, and redundant description is omitted.

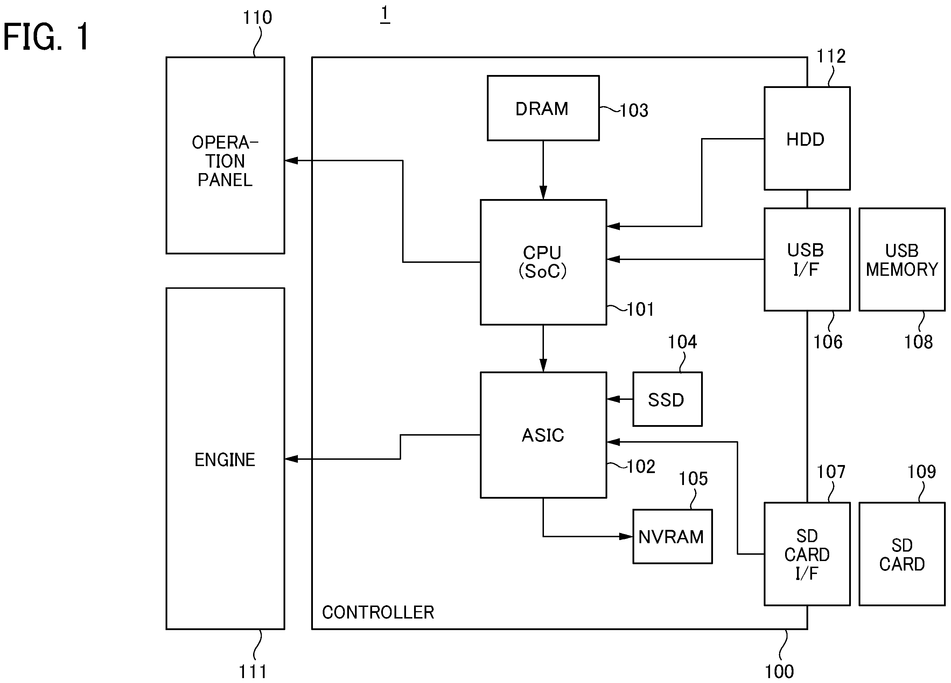

FIG. 1 is a block diagram illustrating a hardware configuration of an information processing apparatus 1 according to the present embodiment.

The information processing apparatus 1 is, for example, a multifunction device called a multifunction peripheral/printer/product (MFP), that is a device having an image processing function such as a facsimile, a scanner, a copier, or a printer, and a communication function. The information processing apparatus 1 is a single device including, for example, a controller (CTL) 100 including a processor (first processor) such as a central processing unit (CPU) 101 in a main body, and an operation panel 110 including a processor (second processor) different from the CPU 101.

The controller 100 includes a CPU 101 (System-on-Chip (SoC) or the like) as an arithmetic device. A dynamic random access memory (DRAM) 103 is connected to the CPU 101 as a storage device. Further, the controller 100 includes a Universal Serial Bus interface (USB I/F) 106 (USB host function) as an interface to the outside, and the USB memory 108 is connected through the USB I/F 106. An operation panel 110 that receives a user's operation input is connected to the CPU 101 of the controller 100, for example, through the USB I/F 106.

An application specific integrated circuit (ASIC) 102 for image processing and various I/F functions is connected to the CPU 101. A small capacity non-volatile random access memory (NVRAM) 105 is connected to the ASIC 102 as a non-volatile memory for managing user data. The NVRAM 105 stores software setting values and the like.

A Secure Digital (SD) card I/F 107 (SD card slot) is also connected to the ASIC 102 as a storage for an optional program. An SD card 109 is inserted and connected to the SD card I/F 107. Further, a solid state drive (SSD) 104 is connected to the ASIC 102 as a storage for a program for booting the system. The controller 100 may be connected to a hard disk drive (HDD) 112 as a large-capacity external storage device. An engine 111 is connected to the ASIC 102.

The present embodiment is a method regarding updating of the operation panel 110. Like the controller 100, the operation panel 110 also includes components such as an SSD, a RAM, and a CPU inside.

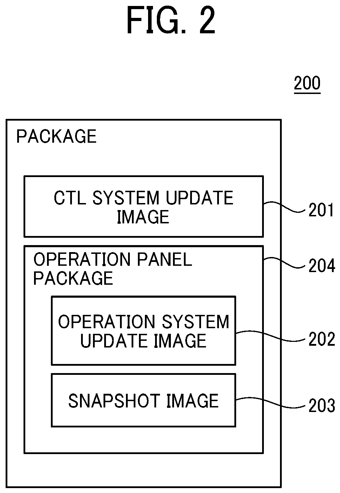

FIG. 2 is a block diagram illustrating an example of a configuration of a package 200 for updating the information processing apparatus. When updating the firmware of the information processing apparatus 1, the package 200 as illustrated in FIG. 2 is installed.

As illustrated in FIG. 2, the package 200 includes a CTL system update image 201 (firmware) of the controller 100, an operation system update image 202 (firmware) of the operation panel 110, and a snapshot image 203 for the operation panel 110 created from the operation system update image 202. The snapshot image 203 stores a snapshot image corresponding to the operation system update image 202 of the operation panel 110.

When all the contents of the package 200 are updated by one update operation, it is necessary to wait until the snapshot image 203 is updated, since the package 200 has the configuration as illustrated in FIG. 2. In general, the snapshot image 203 becomes large in proportion to the capacity of the RAM, file size tends to increase, and the update time becomes a bottleneck.

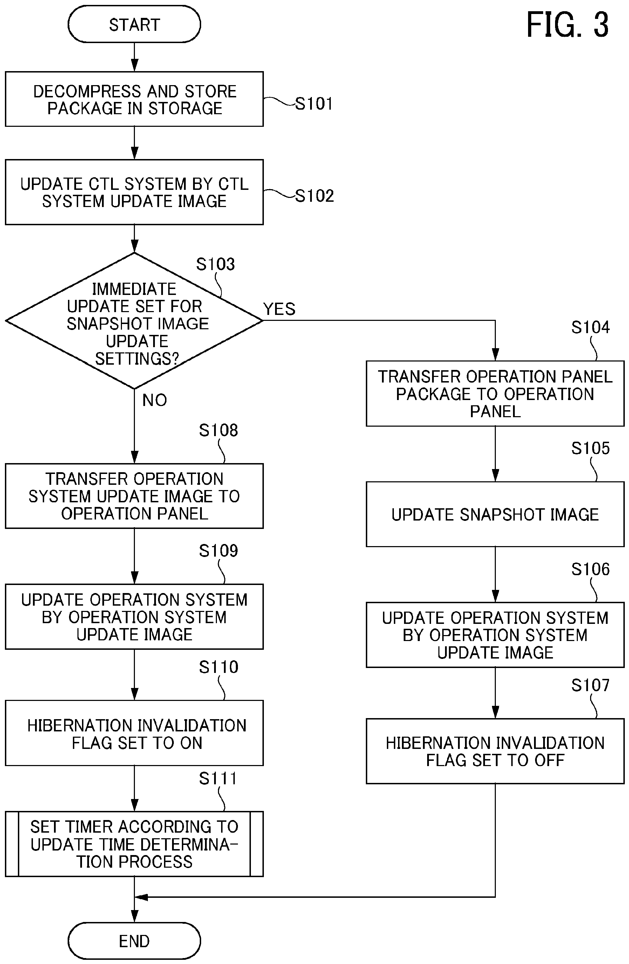

In the present embodiment, update of the information processing apparatus 1 is performed according to an update process of flowchart illustrated in FIG. 3. FIG. 3 is the flowchart illustrating the update process of the information processing apparatus 1 according to the present embodiment.

In step S101, when the package 200 is acquired from the SD card I/F 107 of the controller 100, the package 200 is decompressed and expanded to a storage such as the HDD 112 on the controller 100. In step S102, the system update process on the controller 100 is executed by the CTL system update image 201 of the expanded package 200.

In step S103, whether immediate update is selected for the snapshot image 203 in update settings described below is determined. When the immediate update is selected (Yes in step S103), an operation panel package (the operation system update image 202 and the snapshot image 203) is transmitted to the SSD of the operation panel 110 in step S104. In step S105, an update control unit 133 of the operation panel 110 updates the retained snapshot image by using the received snapshot image 203, and in step S106, updates the system of the operation panel 110 by the operation system update image 202. In step S107, the hibernation invalidation flag is set to off, and hibernation is activated.

On the other hand, when the immediate update is not set (No in step S103), only the operation system update image 202 is transmitted to the operation panel 110 in step S108, and the snapshot image 203 is kept in the HDD 112 of the controller 100 so as not to increase unnecessary transmission time. When the received image is only the operation system update image 202, the update control unit 133 of the operation panel 110 first updates only the system of the operation panel 110 by the operation system update image 202 in step S109. In step S110, by setting the hibernation invalidation flag to ON, the hibernation activation is temporarily invalidated. In step S111, a timer based on an update time determination process described below is set, and the update process ends.

By executing the update process illustrated in FIG. 3, when the snapshot image update setting is not set to immediate update, time required for update is reduced since the update time of the snapshot image 203 is not included.

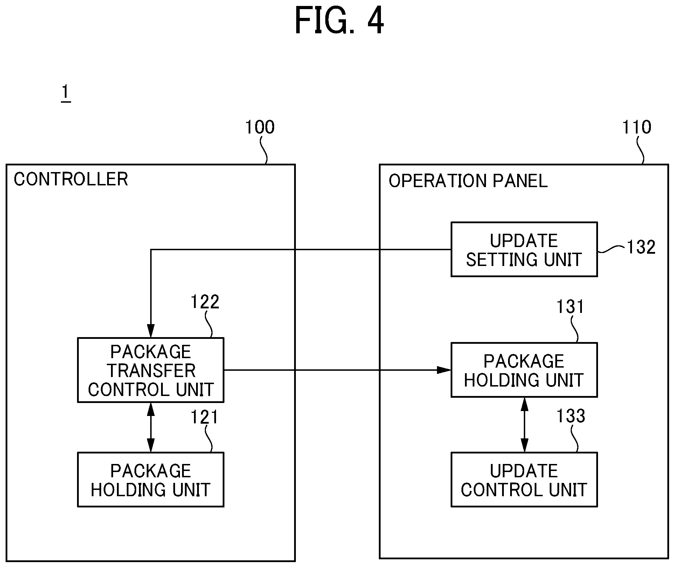

FIG. 4 is a block diagram illustrating a functional configuration of information processing apparatus 1 according to the update process of FIG. 3. As illustrated in FIG. 4, the controller 100 includes a package holding unit 121 and a package transfer control unit 122, and the operation panel 110 includes a package holding unit 131, an update setting unit 132, and an update control unit 133.

The package holding unit 121 holds the package 200 for update input to the controller 100 through the SD card I/F 107 or the like. The package holding unit 121 executes step S101 in the flowchart of FIG. 3.

The package transfer control unit 122 selects data to be transmitted from the package 200 stored in the package holding unit 121 according to the update settings information stored in the update setting unit 132 and transfers the data to the operation panel 110. In the present embodiment, the package transfer control unit 122 transfers the operation panel package (the operation system update image 202 and the snapshot image 203) according to the update settings information stored in the update setting unit 132. Alternatively, the package transfer control unit 122 may transfer only the operation system update image 202 or only the snapshot image 203. The package transfer control unit 122 executes steps S103, S104, and S108 in the flowchart of FIG. 3.

The package holding unit 131 stores the update data transferred from the controller 100. In the present embodiment, either the operation panel package (the operation system update image 202 and the snapshot image 203), only the operation system update image 202, or only the snapshot image 203 is stored.

The update setting unit 132 receives the update settings of the snapshot image 203 by the user, and outputs the update settings information to the package transfer control unit 122 of the controller 100.

The update control unit 133 controls the update of the snapshot image 203 of the operation panel 110 according to the update data stored in the package holding unit 131. In the present embodiment, the update setting unit 132 updates the firmware as well as the snapshot image when the operation panel package (the operation system update image 202 and the snapshot image 203) is stored in the package holding unit 131. On the other hand, when only the operation system update image 202 or only the snapshot image 203 is stored in the package holding unit 131, only one of the firmware update and the snapshot image update is executed. The update control unit 133 executes steps S105 to S107 and S109 to S111 in the flowchart of FIG. 3.

Each function of the package holding unit 121 and the package transfer control unit 122 of the controller 100 of the information processing apparatus 1 illustrated in FIG. 4 is implemented by reading and writing data in the DRAM 103 and the HDD 112 while operating various hardware under the control of the CPU 101, by reading computer software (update program) on hardware such as the CPU 101 and the DRAM 103 of the controller 100.

Further, each function of the package holding unit 131, the update setting unit 132, and the update control unit 133 of the operation panel 110 illustrated in FIG. 4 is implemented by various hardware operated under the control of the CPU, and the reading and writing of data in the RAM and HDD performed by reading computer software (update program) on the hardware such as the CPU and RAM of the operation panel 110. In the present embodiment, by executing the update program of the information processing apparatus 1 on the computer, the controller 100 of the information processing apparatus 1 functions as the package holding unit 121 and the package transfer control unit 122 in FIG. 4, and the operation panel 110 of the information processing apparatus 1 functions as the package holding unit 131, the update setting unit 132, and the update control unit 133 in FIG 4.

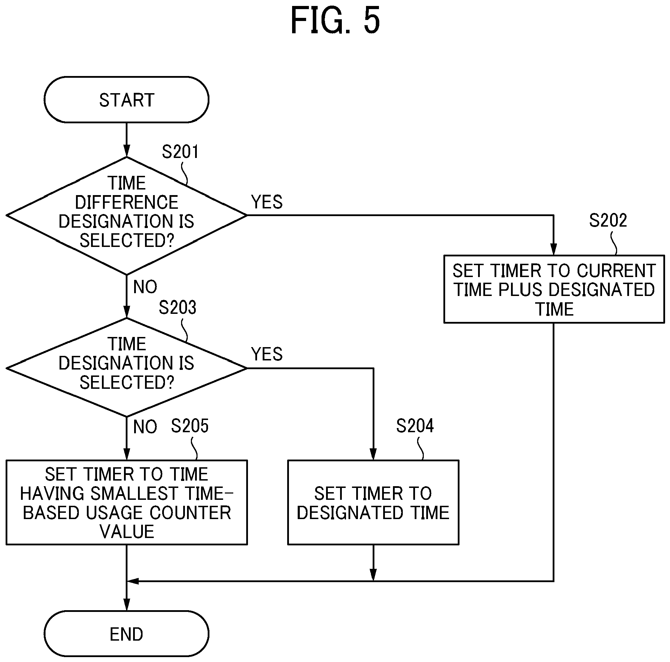

FIG. 5 is a flowchart illustrating an update execution time determination process. The flowchart of FIG. 5 is implemented in step S111 of FIG. 3. In the update execution time determination process, timer value to be set differs depending on the settings described below.

In step S201, whether time difference designation is selected is determined. When the time difference designation is selected (Yes in step S201), the timer value is set to a value obtained by adding designated time to the current time in step S202.

When the time difference designation is not selected (No in step S201), whether time designation is selected is determined in step S203. When the time designation is selected (Yes in step S203), the timer value is set to the designated time in step S204. When the time designation is not selected (No in step S203), the timer value is set to the time having the smallest counter value among the time-based usage counters described below in step S205.

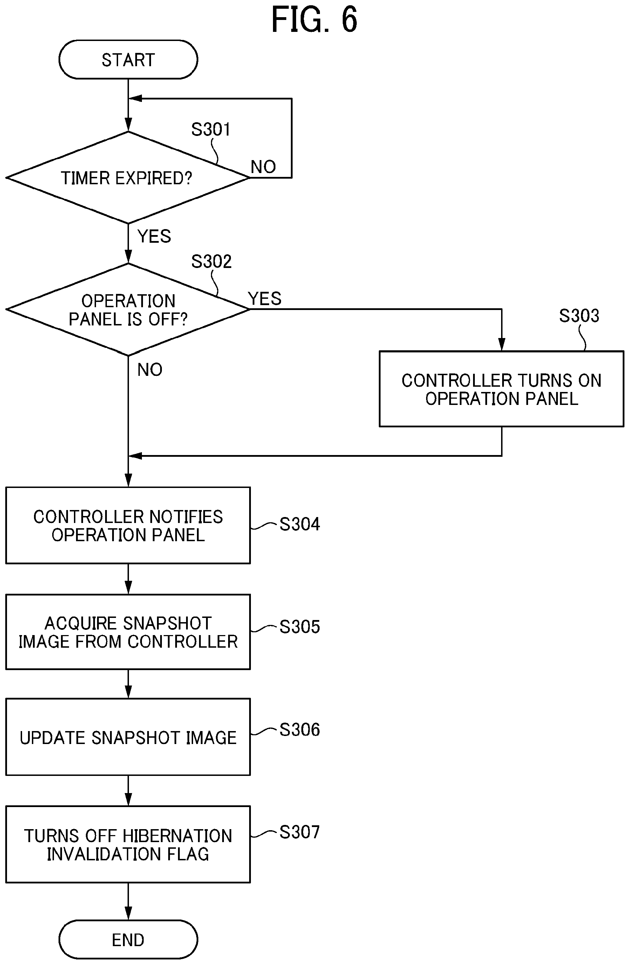

With reference to FIG. 6, a description is given of a snapshot image update process when snap update setting is not immediate update in step S103 of the flowchart of FIG. 3. FIG. 6 is a flowchart illustrating the snapshot image update process according to the present embodiment.

In step S301, the information processing apparatus 1 waits until the timer set in the update execution time determination process expires (No in step S301). When the timer is expired (Yes in step S301), whether the power of the operation panel 110 is off is determined in step S302. If the power is off (Yes in step S302), the power of the operation panel 110 is turned on by the controller 100 in step S303.

In step S304, the package transfer control unit 122 of the controller 100 transmits an update start notification to the operation panel 110, and at the same time, the snapshot image 203 retained in the HDD 112 is transmitted to the operation panel 110 in step S305.

In step S306, the update control unit 133 of the operation panel 110 uses the received snapshot image 203 to update snapshot image and validate the hibernation image.

After the update is completed, the hibernation invalidation flag is set to OFF to enable the hibernation in step S307, and the snapshot image update process ends.

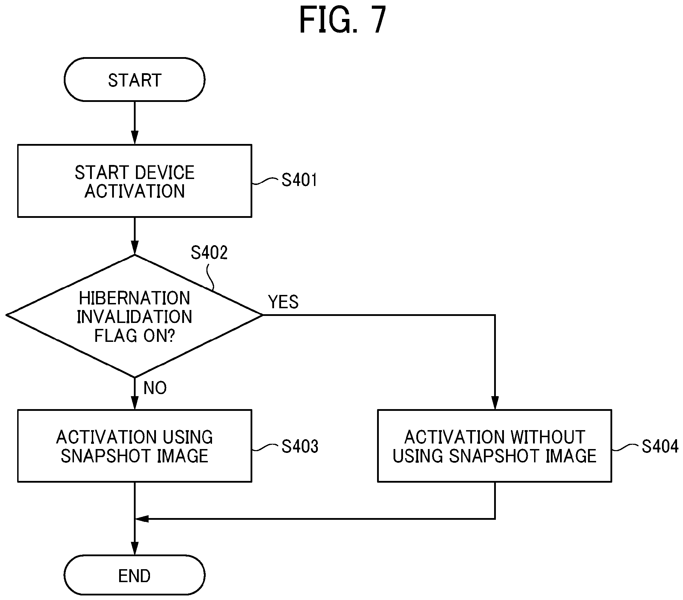

FIG. 7 is a flowchart illustrating a selection process of a startup mode by the hibernation invalidation flag. The process of FIG. 7 is executed by the update control unit 133 of the operation panel 110, for example. When the device activation is started in step S401, whether the hibernation invalidation flag is on is determined in step S402.

Only when the hibernation invalidation flag is off (No in step S402) and the hibernation is valid, the startup using the snapshot image is performed. When the hibernation invalidation flag is on, the startup is performed without using the snapshot image in step S404.

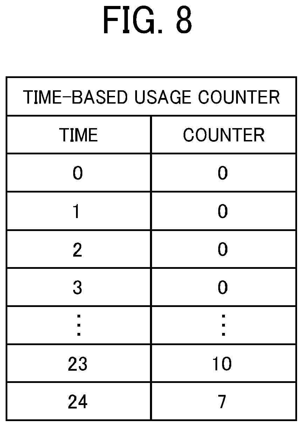

The time-based usage counter used in step S205 of FIG. 5 is described with reference to FIG. 8. FIG. 8 is an example of a time-based usage counter based on number of printing. FIG. 8 illustrates an example in which the information processing apparatus 1 includes a printing function.

As illustrated in FIG. 8, the time is divided at predetermined intervals (every hour in the example of FIG. 8), and the counter value is recorded for each time. The counter value is incremented by 1 each time printing is performed at the relevant time. The counter value represents usage frequency at each time. In the example of FIG. 8, printing is performed 10 times at 23:00, 7 times at 24:00, and no printing is performed at 0:00. The printing is most frequently performed at 23:00.

Using the time-based usage counter illustrated in FIG. 8, in step S205 of FIG. 5, the timer value is set to the time (for example, 1 o'clock) having the smallest counter value. As a result, the snapshot image is updated during the time when usage is least frequent, and the load on the information processing apparatus 1 is reduced.

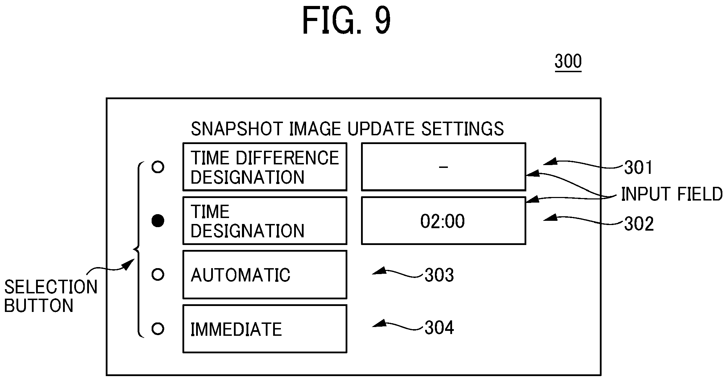

FIG. 9 is a diagram illustrating an example of a snapshot image update setting screen 300. As illustrated in FIG. 9, various setting values related to the above-described update process can be selected and input through the snapshot image update setting screen 300 as a user interface displayed on a screen such as a touch panel of the operation panel 110. The input value is stored on the SSD of the operation panel 110, for example.

In the setting screen 300 of FIG. 9, a time difference designation input field 301, a time designation input field 302, an "automatic" selection button 303, and an "immediate" selection button 304 are displayed. When time is input in the input field 301 for designating the time difference, the timer value is set to the value obtained by adding the designated time to the current time in step S202 of the update execution time determination process in FIG. 5. When time is input in the time designation input field 302, the timer value is set to the designated time in step S204 of the update execution time determination process of FIG. 5. When the "automatic" selection button 303 is selected in step S205 of the update execution time determination process of FIG. 5, the timer value is set to the time having the smallest counter value among the time-based usage counters. When the "immediate" selection button 304 is selected, the process proceeds to step S104 in step S103 of FIG. 3, and the snapshot image update process of the present embodiment is not performed, and the snapshot image is updated at the same time as the firmware update.

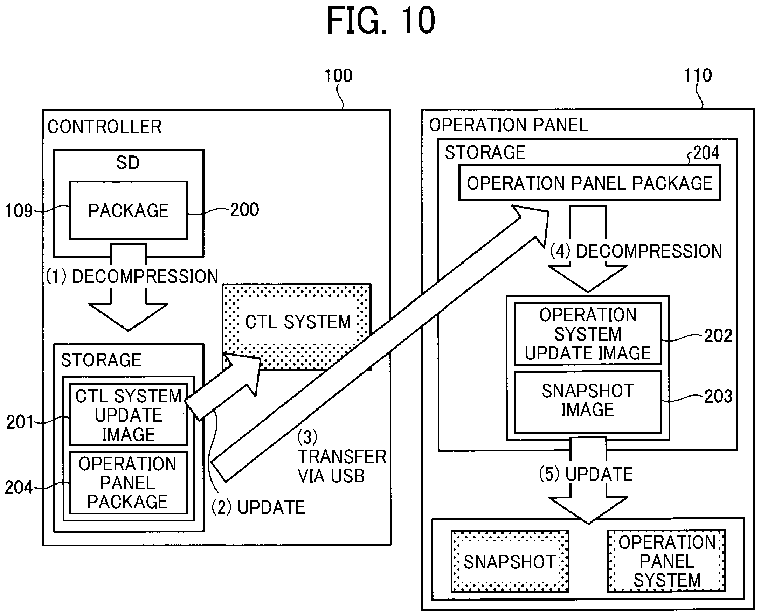

Effect of the present embodiment is described with reference to FIGs. 10 to 12.

FIG. 10 is a diagram illustrating a conventional update process of the information processing apparatus. As illustrated in FIG. 10, when the package 200 for update is input to the controller 100 through the SD card 109, for example, the package 200 is decompressed and stored in the storage in the controller 100 in the first stage.

In the second stage, the CTL system is updated using the CTL system update image 201 (firmware) of the package 200 stored in the storage.

In the third stage, the operation panel package 204 of the package 200 stored in the storage is transferred to the operation panel 110 through USB or the like and stored in the storage in the operation panel 110.

In the fourth stage, the operation panel package 204 is decompressed in the storage of the operation panel 110, and the operation system update image 202 and the snapshot image 203 are expanded.

In the fifth stage, the operation system update image 202 is used to update the operation system, and at the same time, the snapshot image 203 is used to update the snapshot.

As described above, the conventional update method has a problem that the update of the snapshot is also performed when the operation panel package is updated, and thus the update is slow.

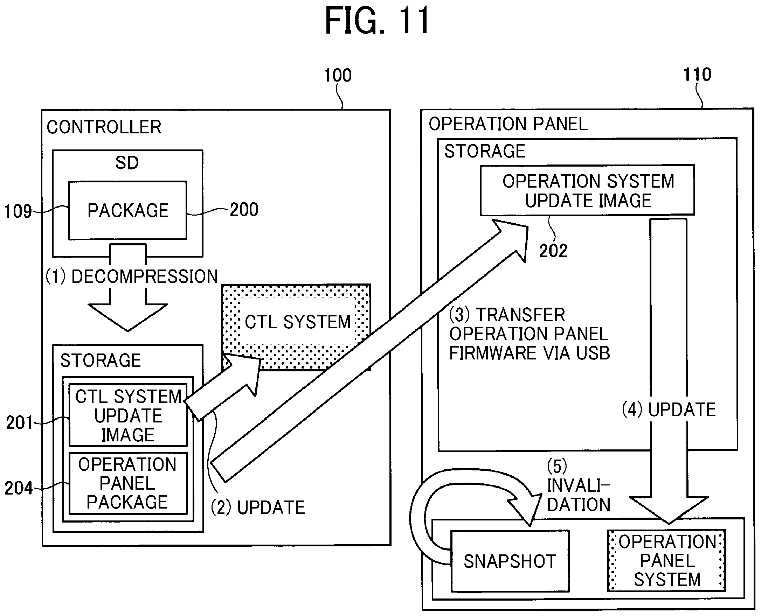

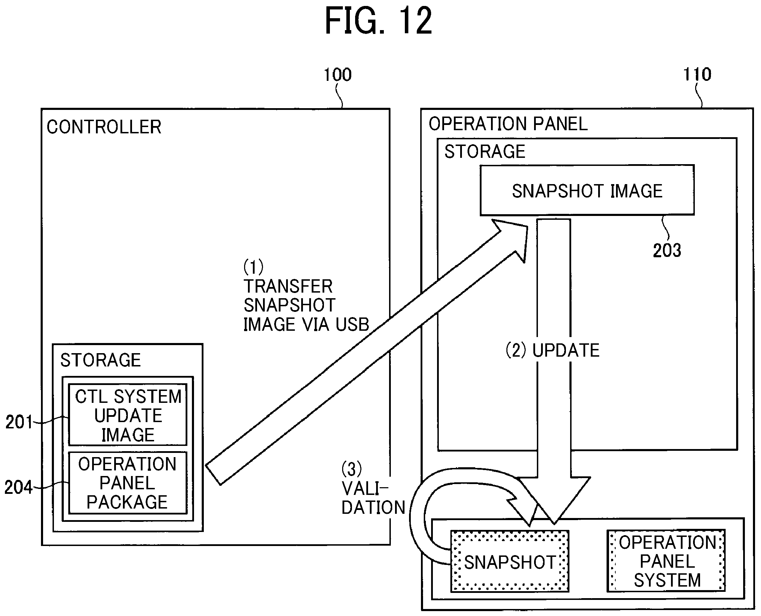

On the other hand, in the present embodiment, as illustrated in FIGs. 11 and 12, the package update and the snapshot update are individually performed.

FIG. 11 is a diagram illustrating a package update process according to the present embodiment. Since the first and second stages are the same as in FIG. 10, description thereof is omitted. In the third stage, of the operation panel package 204 of the package 200 stored in the storage of the controller 100, only the operation system update image 202 is transferred to the operation panel 110 through USB, etc. and stored in the storage in the operation panel 110.

In the fourth stage, only the operation system is updated using the operation system update image 202, and the snapshot update is not performed. Therefore, the update time can be shortened by the amount of snapshot update.

In the fifth step, the snapshot image is invalidated, and hibernation is not started until the snapshot illustrated in FIG. 12 is updated.

FIG. 12 is a diagram illustrating an update process when updating a snapshot image according to the present embodiment. In the first stage, at the timing when the snapshot image can be updated, only the snapshot image 203 of the operation panel package 204 of the package 200 stored in the storage of the controller 100 is transferred to the operation panel 110 through USB or the like and stored in the storage in the operation panel 110.

In the second stage, only the snapshot is updated using the snapshot image 203.

In the third stage, the snapshot image is enabled to perform hibernation boot after the next boot.

As described above, in the information processing apparatus 1 according to the present embodiment, the update control unit 133 of the operation panel 110 updates the snapshot image, which is the boot image used for hibernation, at a timing different from the firmware update timing. With this configuration, it is not necessary to wait for the snapshot image to be updated when the firmware is updated, so the firmware is updated efficiently. Also, the snapshot image can be updated at an appropriate timing without depending on the firmware update, so the snapshot image is updated efficiently.

Further, in the present embodiment, as described with reference to step S202 of FIG. 5 and the time difference designation input field 301 of FIG. 9, the snapshot image update can be executed after a predetermined time from the firmware update. As a result, the snapshot image update can be executed at a timing that is definitely different from the firmware update.

Further, in the present embodiment, as described with reference to step S204 of FIG. 5 and the time designation input field 302 of FIG. 9, the snapshot image can be updated at the designated time. As a result, for example, it becomes possible to execute the snapshot image update while surely avoiding the device usage time zone, and the convenience is improved.

In addition, in the present embodiment, as described with reference to step S205 in FIG. 5 and the "automatic" selection button 303 in FIG. 9, the snapshot image can be updated at a time when the frequency of usage is low. As a result, even when the usage time of the device is not clearly determined, the time zone with the least usage frequency can be automatically selected to execute snapshot image update, and the user's effort of setting the update time can be reduced.

In the present embodiment, the package transfer control unit 122 of the controller 100, when updating the firmware of the controller 100 in the update package 200 held in the controller 100, transmits the firmware for updating the operation panel 110 (operation system update image 202) to the operation panel 110, and the update snapshot image 203 of the operation panel 110 is transmitted to the operation panel 110 with a shift from the firmware update timing of the controller 100. The update control unit 133 of the operation panel 110 executes firmware update of the operation panel 110 when receiving the operation system update image 202 of the operation panel 110 from the package transfer control unit 122, and when the update snapshot image 203 is received from the package transfer control unit 122, the snapshot image of the operation panel 110 is updated. In the present embodiment, the update control unit 133 of the operation panel 110 performs update process by using update data each time the update data is received from the controller 100. It is possible to easily stagger the timing of firmware update and snapshot image update. As a result, a desired update process can be implemented with the present configuration.

The present embodiment is described above with reference to specific examples. However, the present disclosure is not limited to these specific examples. Those obtained by those skilled in the art who make appropriate design changes to these specific examples are also included in the scope of the present disclosure as long as the modified examples have the features of the present disclosure. The elements provided in each of the specific examples described above and the arrangement, conditions, shapes, and the like of the elements are not limited to those illustrated but can be changed as appropriate. The respective elements included in the above-described specific examples can be appropriately combined as long as there is no technical contradiction.

The present disclosure can be implemented in any convenient form, for example using dedicated hardware, or a mixture of dedicated hardware and software. The present disclosure may be implemented as computer software implemented by one or more networked processing apparatuses. The processing apparatuses can include any suitably programmed apparatuses such as a general purpose computer, personal digital assistant, mobile telephone (such as a Wireless Application Protocol (WAP) or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the internet. The carrier medium can also include a storage medium for storing processor readable code such as a floppy disk, hard disk, compact disc read only memory (CD ROM), magnetic tape device or solid state memory device. The present disclosure can be implemented in any convenient form, for example using dedicated hardware, or a mixture of dedicated hardware and software. The present disclosure may be implemented as computer software implemented by one or more networked processing apparatuses. The processing apparatuses can include any suitably programmed apparatuses such as a general purpose computer, personal digital assistant, mobile telephone (such as a Wireless Application Protocol (WAP) or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the internet. The carrier medium can also include a storage medium for storing processor readable code such as a floppy disk, hard disk, compact disc read only memory (CD ROM), magnetic tape device or solid state memory device.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above.

## Claims

1. An information processing apparatus (1) having a start-up function by hibernation, the information processing apparatus (1) comprising:
an update control unit (133) for executing an update of a snapshot image (203) that is a boot image used for hibernation, at a time different from firmware update timing;
a controller (100) including a first processor (101); and
an operation panel (110) including a second processor, the second processor implementing the update control unit (133),
wherein the controller (100) includes a package transfer control unit (122) that:
(i) transmits update firmware (202) for the operation panel (110), obtained from an update package (200) held by the controller (100), to the operation panel (110) at a first time when updating firmware for the controller (100); and
(ii) transmits the snapshot image (203) for updating the operation panel to the operation panel (110) at a second time different from the firmware update timing of the controller (100),
wherein the controller (100) further includes a package holding unit (121) that stores the snapshot image (203) until said transmission to the operation panel (110) at the second time,
wherein the update control unit (133):
(i) updates the firmware of the operation panel (110) when receiving the update firmware of the operation panel from the package transfer control unit (122); and
(ii) updates the snapshot image (203) of the operation panel (110) when the update snapshot image is received from the package transfer control unit (122).

2. The information processing apparatus (1) of claim 1, wherein
the update control unit (133) updates the snapshot image (203) after a predetermined time has passed from the firmware update timing.

3. The information processing apparatus (1) of claim 1 or 2, wherein
the update control unit (133) updates the snapshot image (203) at a designated time.

4. The information processing apparatus (1) of any one of claims 1 to 3, wherein
the update control unit (133) updates the snapshot image (203) at a time when usage frequency is the least.

5. A method for updating, performed by an information processing apparatus (1) having a hibernation activation function, a controller (100) including a first processor (101), a package holding unit (121), a package transfer control unit (122), and an operation panel (110) including a second processor implementing an update control unit (133), the method comprising:
with the package transfer control unit (122):
(i) transmitting update firmware (202) for the operation panel (110), obtained from an update package (200) held by the controller (100), to the operation panel (110) at a first time when updating firmware for the controller (100); and
(ii) transmitting the snapshot image (203) for updating the operation panel to the operation panel (110) at a second time different from the firmware update timing of the controller (100),
with the package holding unit (121), storing the snapshot image (203) until said transmission to the operation panel at the second time, and
with the update control unit (133), updating the snapshot image (203) that is a startup image used for hibernation at a time different from firmware update timing by
(i) updating the firmware of the operation panel (110) when receiving the update firmware of the operation panel from the package transfer control unit (122); and
(ii) updating the snapshot image (203) of the operation panel (110) when the update snapshot image is received from the package transfer control unit (122).

6. A carrier means carrying computer readable code for controlling a computer system to carry out the update method for an information processing apparatus (1) of claim 5.

## Patentansprüche

1. Informationsverarbeitungsvorrichtung (1), die eine Startfunktion durch Ruhezustand aufweist, wobei die Informationsverarbeitungsvorrichtung (1) Folgendes umfasst:
eine Aktualisierungssteuereinheit (133) zum Ausführen einer Aktualisierung eines Speicherauszugabbildes (203), das ein für den Ruhezustand verwendetes Boot-Abbild ist, zu einer Zeit, die sich von einem Firmware-Aktualisierungszeitpunkt unterscheidet,
eine Steuereinrichtung (100), die einen ersten Prozessor (101) einschließt, und
ein Bedienfeld (110), das einen zweiten Prozessor einschließt, wobei der zweite Prozessor die Aktualisierungssteuereinheit (133) umsetzt,
wobei die Steuereinrichtung (100) eine Paketübertragungssteuereinheit (122) einschließt, die:
(i) Aktualisierungsfirmware (202) für das Bedienfeld (110), die von einem Aktualisierungspaket (200) erlangt wird, das durch die Steuereinrichtung (100) gehalten wird, zu einer ersten Zeit, wenn die Firmware für die Steuereinrichtung (100) aktualisiert wird, an das Bedienfeld (110) übermittelt und
(ii) das Speicherauszugabbild (203) zum Aktualisieren des Bedienfeldes zu einer zweiten Zeit, die sich von dem Firmware-Aktualisierungszeitpunkt der Steuereinrichtung (100) unterscheidet, an das Bedienfeld (110) übermittelt,
wobei die Steuereinrichtung (100) ferner eine Pakethalteeinheit (121) einschließt, die das Speicherauszugabbild (203) bis zu der Übermittlung an das Bedienfeld (110) zu der zweiten Zeit speichert,
wobei die Aktualisierungssteuereinheit (133):
(i) die Firmware des Bedienfeldes (110) aktualisiert, wenn sie die Aktualisierungsfirmware des Bedienfeldes von der Paketübertragungssteuereinheit (122) empfängt, und
(ii) das Speicherauszugabbild (203) des Bedienfeldes (110) aktualisiert, wenn das Aktualisierungsspeicherauszugabbild von der Paketübertragungssteuereinheit (122) empfangen wird.

2. Informationsverarbeitungsvorrichtung (1) nach Anspruch 1, wobei
die Aktualisierungssteuereinheit (133) das Speicherauszugabbild (203) aktualisiert, nachdem eine vorbestimmte Zeit von dem Firmware-Aktualisierungszeitpunkt aus vergangen ist.

3. Informationsverarbeitungsvorrichtung (1) nach Anspruch 1 oder 2, wobei
die Aktualisierungssteuereinheit (133) das Speicherauszugabbild (203) zu einer zugewiesenen Zeit aktualisiert.

4. Informationsverarbeitungsvorrichtung (1) nach einem der Ansprüche 1 bis 3, wobei
die Aktualisierungssteuereinheit (133) das Speicherauszugabbild (203) zu einer Zeit aktualisiert, wenn die Nutzungshäufigkeit am geringsten ist.

5. Verfahren zum Aktualisieren, durchgeführt durch eine Informationsverarbeitungsvorrichtung (1), die eine Ruhzustandsaktivierungsfunktion aufweist, einer Steuereinrichtung (100), die einen ersten Prozessor (101), eine Pakethalteeinheit (121), eine Paketübertragungssteuereinheit (122) und ein Bedienfeld (110), das einen zweiten Prozessor einschließt, der eine Aktualisierungssteuereinheit (133) umsetzt, einschließt, wobei das Verfahren Folgendes umfasst:
mit der Paketübertragungssteuereinheit (122):
(i) Übermitteln von Aktualisierungsfirmware (202) für das Bedienfeld (110), die von einem Aktualisierungspaket (200) erlangt wird, das durch die Steuereinrichtung (100) gehalten wird, zu einer ersten Zeit, wenn die Firmware für die Steuereinrichtung (100) aktualisiert wird, an das Bedienfeld (110) und
(ii) Übermitteln des Speicherauszugabbildes (203) zum Aktualisieren des Bedienfeldes zu einer zweiten Zeit, die sich von dem Firmware-Aktualisierungszeitpunkt der Steuereinrichtung (100) unterscheidet, an das Bedienfeld (110),
mit der Pakethalteeinheit (121), Speichern des Speicherauszugabbildes (203) bis zu der Übermittlung an das Bedienfeld zu der zweiten Zeit und,
mit der Aktualisierungssteuereinheit (133), Aktualisieren des Speicherauszugabbildes (203), das ein für den Ruhezustand verwendetes Start-Abbild ist, zu einer Zeit, die sich von einem Firmware-Aktualisierungszeitpunkt unterscheidet, durch
(i) Aktualisieren der Firmware des Bedienfeldes (110), wenn die Aktualisierungsfirmware des Bedienfeldes von der Paketübertragungssteuereinheit (122) empfangen wird, und
(ii) Aktualisieren des Speicherauszugabbildes (203) des Bedienfeldes (110), wenn das Aktualisierungsspeicherauszugabbild von der Paketübertragungssteuereinheit (122) empfangen wird.

6. Trägermittel, das rechnerlesbaren Code zum Steuern eines Rechnersystems trägt, um das Aktualisierungsverfahren für eine Informationsverarbeitungsvorrichtung (1) nach Anspruch 5 auszuführen.

## Revendications

1. Appareil de traitement d'informations (1) présentant une fonction de démarrage par hibernation, l'appareil de traitement d'informations (1) comprenant :
une unité de commande de mise à jour (133) pour exécuter une mise à jour d'une image instantanée (203) qui est une image d'amorçage utilisée pour une hibernation, à une heure différente de la synchronisation de mise à jour de micrologiciel ;
un dispositif de commande (100) incluant un premier processeur (101) ; et
un panneau de commande (100) incluant un second processeur, le second processeur mettant en œuvre l'unité de commande de mise à jour (133),
dans lequel le dispositif de commande (100) inclut une unité de commande de transfert de paquets (122) qui :
(i) transmet un micrologiciel de mise à jour (202) pour le panneau de commande (110), obtenu à partir d'un paquet de mise à jour (200) détenu par le dispositif de commande (100), au panneau de commande (110) à une première heure lors de la mise à jour du micrologiciel pour le dispositif de commande (100) ; et
(ii) transmet l'image instantanée (203) pour mettre à jour le panneau de commande au panneau de commande (110) à une seconde heure différente de la synchronisation de mise à jour de micrologiciel du dispositif de commande (100),
dans lequel le dispositif de commande (100) inclut en outre une unité de maintien de paquets (121) qui stocke l'image instantanée (203) jusqu'à ladite transmission au panneau de commande (110) à la seconde heure,
dans lequel l'unité de commande de mise à jour (133) :
(i) met à jour le micrologiciel du panneau de commande (110) lorsqu'elle reçoit le micrologiciel de mise à jour du panneau de commande depuis l'unité de commande de transfert de paquets (122) ; et
(ii) met à jour l'image instantanée (203) du panneau de commande (110) lorsque l'image instantanée de mise à jour est reçue depuis l'unité de commande de transfert de paquets (122).

2. Appareil de traitement d'informations (1) selon la revendication 1, dans lequel
l'unité de commande de mise à jour (133) met à jour l'image instantanée (203) après qu'un temps prédéterminé s'est écoulé depuis la synchronisation de mise à jour de micrologiciel.

3. Appareil de traitement d'informations (1) selon la revendication 1 ou 2, dans lequel
l'unité de commande de mise à jour (133) met à jour l'image instantanée (203) à une heure désignée.

4. Appareil de traitement d'informations (1) selon l'une quelconque des revendications 1 à 3, dans lequel
l'unité de commande de mise à jour (133) met à jour l'image instantanée (203) à une heure où la fréquence d'utilisation est la plus basse.

5. Procédé pour une mise à jour, réalisée par un appareil de traitement d'informations (1) présentant une fonction d'activation d'hibernation, d'un dispositif de commande (100) incluant un premier processeur (101), une unité de maintien de paquets (121), une unité de commande de transfert de paquets (122) et un panneau de commande (110) incluant un second processeur mettant en œuvre une unité de commande de mise à jour (133), le procédé comprenant :
avec l'unité de commande de transfert de paquets (122) :
(i) la transmission d'un micrologiciel de mise à jour (202) pour le panneau de commande (110), obtenu depuis un paquet de mise à jour (200) détenu par le dispositif de commande (100), au panneau de commande (110) à une première heure lors de la mise à jour du micrologiciel pour le dispositif de commande (100) ; et
(ii) la transmission de l'image instantanée (203) pour mettre à jour le panneau de commande au panneau de commande (110) à une seconde heure différente de la synchronisation de mise à jour de micrologiciel du dispositif de commande (100),
avec l'unité de maintien de paquets (121), le stockage de l'image instantanée (203) jusqu'à ladite transmission au panneau de commande à la seconde heure, et
avec l'unité de commande de mise à jour (133), la mise à jour de l'image instantanée (203) qui est une image de démarrage utilisée pour l'hibernation à une heure différente de la synchronisation de mise à jour de micrologiciel
(i) en mettant à jour le micrologiciel du panneau de commande (110) lors de la réception du micrologiciel de mise à jour du panneau de commande depuis l'unité de commande de transfert de paquets (122) ; et
(ii) en mettant à jour l'image instantanée (203) du panneau de commande (110) lorsque l'image de capture d'écran de mise à jour est reçue depuis l'unité de commande de transfert de progiciel (122).

6. Moyen de support supportant un code lisible par ordinateur pour commander un système informatique pour mener à bien le procédé de mise à jour pour un appareil de traitement d'informations (1) selon la revendication 5.
